# FASCICULE DE BREVET EUROPEEN

(11) **EP 1 103 391 B1**
(45) Date de publication et mention de la délivrance du brevet: **23.02.2005**
(21) Numéro de dépôt: 00125485.3
(22) Date de dépôt: 21.11.2000
(51) Int. Cl.: B60C 19/08, B29C 47/04, B29C 47/06

(54) **Appareillage de coextrusion de mélanges caoutchouteux**
Vorrichtung zum Coextrudieren von Kautschukmischungen
Apparatus for co-extruding elastomeric compounds

(30) Priorité: 23.11.1999 FR 9915025
(43) Date de publication de la demande: 30.05.2001
(73) Titulaire: Sociéte de Technologie Michelin, 63000 Clermont-Ferrand Cedex 09 (FR); Michelin Recherche et Technique S.A., 1763 Granges-Paccot (CH)
(72) Inventeur: Calvar, Didier, 63110 Beaumont (FR)
(74) Mandataire: Cohen, Sylvia

(56) Documents cités:
- EP-A- 0 895 878
- EP-A- 0 925 903
- WO-A-99/43506
- US-A- 2 342 576
- PATENT ABSTRACTS OF JAPAN vol. 2000, no. 05, 14 septembre 2000 (2000-09-14) -& JP 2000 052400 A (BRIDGESTONE CORP), 22 février 2000 (2000-02-22)
- PATENT ABSTRACTS OF JAPAN vol. 1999, no. 10, 31 août 1999 (1999-08-31) -& JP 11 129713 A (BRIDGESTONE CORP), 18 mai 1999 (1999-05-18)

## Description

La présente invention concerne un procédé destiné à l'obtention d'un pneumatique possédant plusieurs mélanges comprenant à titre de charge majoritaire une charge non-conductrice telle que la silice ou mélanges faiblement chargés en noir de carbone, au moins deux de ces mélanges constituant la bande de roulement. L'invention concerne également un appareillage en vue de la mise en oeuvre d'un tel procédé.

Les problèmes d'environnement étant de plus en plus cruciaux, les économies de carburant et la lutte contre les nuisances créées par les véhicules à moteur étant devenues une priorité, un des objectifs des manufacturiers de pneumatiques est de réaliser un pneumatique possédant à la fois une très faible résistance au roulement, une excellente adhérence tant sur sol sec que sur sol humide ou enneigé ou verglacé, une très bonne résistance à l'usure, et enfin un bruit de roulement réduit.

Pour atteindre cet objectif, il a été proposé dans la demande de brevet européen EP A 501 227, un pneumatique possédant une bande de roulement comportant à titre de charge renforçante principale de la silice. Si cette solution permet d'obtenir le meilleur compromis entre l'ensemble des propriétés très contradictoires mentionnées ci-dessus, il s'est cependant avéré qu'en fonction des véhicules, les pneumatiques mettant en oeuvre une bande de roulement comportant à titre de charge renforçante principale de la silice présentent l'inconvénient d'accumuler à un degré plus ou moins important l'électricité statique qui se forme par friction du pneumatique sur la route lors du roulage du véhicule en raison de l'absence de conductivité électrique de la silice.

L'électricité statique ainsi accumulée dans un pneumatique est susceptible de provoquer, lorsque certaines conditions particulières sont réunies, un désagréable choc électrique à l'occupant d'un véhicule, lorsqu'il est amené à toucher la carrosserie du véhicule. Cette électricité statique est, en outre, susceptible de hâter le vieillissement du pneumatique en raison de l'ozone générée par la décharge électrique. Elle peut également être à l'origine, en fonction de la nature du sol et du véhicule, d'un mauvais fonctionnement de la radio embarquée dans le véhicule en raison des interférences qu'elle génère.

Ce problème d'accumulation d'électricité statique dans un pneumatique et de la plupart des inconvénients qui y sont liés est fort ancien et s'est déjà posé lorsque la charge renforçante utilisée était du noir de carbone.

La demande EP 0 658 452 A1 décrit l'adaptation de principes connus de longue date à un pneumatique dit moderne, adaptation qui permet de résoudre les principaux problèmes afférant aux solutions proposées dans différents documents anciens et, en particulier, les hétérogénéités néfastes introduites dans les architectures de pneumatique. La solution proposée consiste à insérer une bande de mélange caoutchouteux conducteur ou insert, s'étendant préférentiellement sur toute la circonférence du pneumatique et reliant la surface de la bande de roulement soit à l'une des nappes de sommet, soit à l'armature de carcasse, soit à tout autre partie du pneumatique suffisamment conductrice d'électricité, la nécessaire conductivité électrique étant conférée par la présence d'un noir de carbone adapté.

Si une telle solution est parfaitement viable pour un pneumatique comportant une bande de roulement constitué par un seul mélange non-conducteur, par exemple une bande de roulement de véhicule de tourisme, il n'en est pas de même dans le cas d'un pneumatique comportant plusieurs couches de mélanges caoutchouteux au-dessus de l'armature de carcasse et des couches de mélanges caoutchouteux entre l'armature de sommet et l'armature de carcasse, comme tel est le cas de tout pneumatique susceptible de rouler avec une température de fonctionnement stabilisée élevée, comme les véhicules lourds ou les véhicules rapides.

En effet, si pour des raisons quelconques, on est amené à doter un tel pneumatique d'une couche, ou partie intérieure de la bande de roulement (partie non en contact avec le sol), non-conductrice, entre armature de sommet et partie extérieure (partie en contact avec le sol) de la bande de roulement rendue conductrice par la présence d'un insert circonférentiel ou zébrure, ladite partie intérieure devra être rendue conductrice. De même, une couche entre armature de carcasse et armature de sommet, présentant des surépaisseurs notoires dans les régions des bords de nappes de sommet, devra aussi être rendue conductrice si elle ne l'est pas initialement.

Une première solution consiste, comme décrit dans la demande française FR 97/02276 de la demanderesse, à assurer la connexion électrique entre deux premières couches conductrices ou rendues conductrices, séparée par une troisième couche non-conductrice, par au moins une bande de mélange caoutchouteux de faible épaisseur, largeur et longueur, posée entre les deux faces de la soudure de la troisième couche non-conductrice et en contact avec les moyens rendant conductrices les deux premières couches reliées par la connexion. Bien que satisfaisante industriellement, cette méthode nécessite une pose de produit supplémentaire et entraîne un coût de fabrication additionnel.

Une deuxième solution consiste, comme décrit dans la demande internationale WO 99/43506 de la demanderesse, à doter chaque couche non-conductrice d'un insert circonférentiel de mélange conducteur et après extrusion de ladite couche par des moyens usuels d'extrusion, et à réunir ensuite les deux produits entre eux avant pose sur le sommet, lesdites couches ayant une paroi de contact commune et la largeur de l'insert de l'une des couches au niveau de la paroi de contact étant égale à au moins 10 fois celle de l'insert de l'autre couche à ce même niveau. Cette méthode permet effectivement de rendre chaque couche conductrice et d'assurer la connexion électrique entre celles-ci et l'armature de carcasse.
Cependant, cette méthode devient trop complexe dans le cas où il ne s'agit plus seulement d'avoir deux couches constituées par deux mélanges caoutchouteux distincts mais trois couches, quatre couches ou plus avec des mélanges caoutchouteux différents.

Par ailleurs, certains mélanges caoutchouteux possèdent des propriétés rhéologiques si différentes qu'elles rendent extrêmement difficile leur collage. C'est notamment le cas lorsque l'un des mélanges est plus décohésif que l'autre.
Lorsque l'on souhaite réunir de tels mélanges au sein d'une bande de roulement par exemple et afin d'éviter des astuces consistant à utiliser un agent de liaison tel qu'une colle ou une gomme spécifique de liaison entre les deux, on fait appel à la coextrusion, qui présente, de plus, un intérêt économique industriel certain.

Le document EP 0 925 903 décrit un procédé de fabrication selon le préambule de la revendication 1 et un appareillage de coextrusion selon le préambule de la revendication 4.

L'invention a pour objet un procédé de fabrication d'un pneumatique comprenant au moins deux couches de mélanges caoutchouteux non-conducteurs de l'électricité et un insert circonférentiel de mélange conducteur permettant la dissipation des charges électriques induites par le roulage du pneumatique, le plus simple possible et un appareillage de coextrusion de mise en oeuvre dudit procédé.

Selon l'invention, le procédé d'obtention d'un élément à base de mélanges caoutchouteux destiné à la fabrication d'un pneumatique comportant les étapes suivantes :
- on extrude par coextrusion au moins deux couches de mélanges caoutchouteux sur une extrudeuse principale munie d'au moins deux vis d'extrusion respectivement pourvue d'un canal d'écoulement débouchant dans un même orifice d'extrusion délimité par les première et deuxième parois d'une lame d'extrusion,
- on insère par coextrusion simultanément au travers des deux couches au moins un insert de mélange caoutchouteux est caractérisé en ce que la dite insertion est réalisée au moyen d'une buse d'une micro-extrudeuse, ladite buse étant appliquée contre la deuxième paroi de la lame d'extrusion de l'extrudeuse principale.

L'adaptation du procédé utilisée pour l'extrusion d'un seul produit consistant en une injection directement au niveau de la lame d'extrusion dans le mélange profilé à la coextrusion de deux mélanges ou plus, est difficilement envisageable pour l'homme du métier. En effet, comme on l'a dit précédemment la coextrusion présente l'avantage considérable de réaliser un collage entre deux mélanges dont les propriétés rhéologiques rendent leur liaison extrêmement difficile à réaliser et à maintenir à moins de faire appel à la présence d'autres composés. Or ce phénomène et rendu possible dans le cadre de la coextrusion grâce à différents facteurs : un collage à cru, en température, en pression, sans contact à l'air libre et avant profilage. Il apparaît clairement a priori que la présence d'une buse traversant ces mélanges au niveau de la lame qui vient modifier l'ensemble des conditions permettant la liaison de ces mélanges, et créer sur toute une longueur des mélanges une interruption de leur interface, aurait pu nuire au collage des deux mélanges ou engendrer de graves défauts de liaison au niveau de l'interface entre les deux mélanges par création à l'état non vulcanisé d'amorces de décollage, ceci en supposant que les deux mélanges vont se recoller après le passage de la buse ce qui paraît aussi loin d'être acquis.

Or la demanderesse a découvert de façon surprenante que les deux mélanges se recollent effectivement après le passage de cette buse et que la présence d'un insert circonférentiel dans les deux mélanges et à leur interface n'affecte pas leur liaison.

L'invention concerne également un appareillage de coextrusion de mélanges caoutchouteux qui comprend une extrudeuse principale comportant une tête d'extrusion comprenant au moins deux canaux d'écoulement chacun d'un mélange caoutchouteux, lesdits canaux débouchant sur un même orifice d'extrusion au travers duquel sont refoulés les deux mélanges caoutchouteux, l'orifice d'extrusion étant délimité par les première et deuxième parois d'une lame d'extrusion, l'appareillage étant caractérisé en ce qu'il comprend également au moins une micro-extrudeuse d'un troisième mélange caoutchouteux dont la tête d'extrusion est munie à son extrémité d'une buse, ladite buse étant insérée dans la première paroi de la lame d'extrusion de l'extrudeuse principale de sorte que la buse d'extrusion soit placée dans l'orifice d'extrusion de l'extrudeuse principale et appliquée contre la deuxième paroi de la lame d'extrusion de ladite extrudeuse principale afin d'insérer le troisième mélange caoutchouteux dans le profilé des mélanges caoutchouteux sortant de l'extrudeuse principale.

D'autres avantages et caractéristiques de l'invention, apparaîtront à la lecture d'un exemple de réalisation d'un pneumatique et d'un appareillage conformes à l'invention, en référence au dessin annexé dans lequel :
- la figure 1 est une représentation perspective schématique de la partie sommet d'un pneumatique conforme à l'invention,
- la figure 2 est une coupe d'une partie de l'appareillage conforme à l'invention,
- la figure 3 est un agrandissement du détail A de l'appareil représenté sur la figure 2.

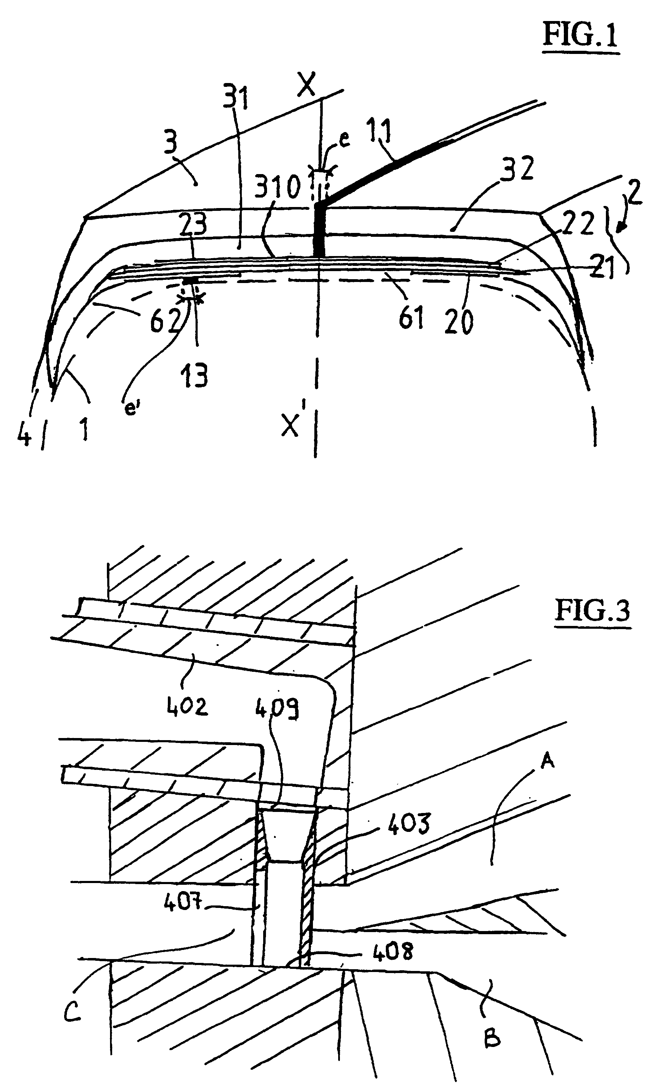

Selon la figure 1, le pneumatique, de dimension 315/80.R.22.5, conçu pour avoir une basse résistance au roulement, comprend une armature de carcasse 1, composée d'une nappe métallique formée de câbles métalliques inextensibles enrobés dans un mélange de calandrage caoutchouteux, rendu conducteur des charges électrostatiques par l'intermédiaire d'un noir de carbone couramment utilisé comme charge renforçante dans les mélanges. Ladite armature de carcasse 1 est, comme connue, ancrée à au moins une tringle dans chaque bourrelet pour former un retournement (non montrés). A l'intérieur de ladite armature de carcasse 1 se trouvent les couches usuelles de renfort, et les couches dites intérieures constituées de mélanges généralement imperméables aux gaz de gonflage connus. La(les) extrémité(s) de cette(ces) couche(s) intérieure(s) est(sont) généralement recouverte(s) par la partie axialement interne de la couche protectrice du bourrelet (non montrée), couche d'usure dont la partie axialement externe vient prendre appui sur la jante de montage, ladite couche étant généralement très chargée en noir de carbone, donc fortement conductrice.

L'armature de carcasse 1 est surmontée en son sommet d'une armature de sommet, composée, dans l'exemple décrit, de deux demi-nappes dites de triangulation 20 formées de câbles métalliques inextensibles orientés par rapport à la direction circonférentielle d'un angle pouvant être compris entre 30° et 90° ; puis radialement au-dessus, de deux nappes 21 et 22 dites de travail composées de câbles métalliques inextensibles croisés d'une nappe à la suivante en faisant avec la direction circonférentielle des angles pouvant être égaux ou inégaux et de valeur absolue comprise entre 10° et 30° ; puis généralement, en dernier lieu d'au moins une nappe 23 dite de protection formée de câbles élastiques faisant avec la direction circonférentielle un angle égal en sens et valeur à l'angle de la nappe de travail radialement la plus à l'extérieur. Tous les câbles de cette armature de sommet 2 sont enrobés dans un ou plusieurs mélange(s) de calandrage caoutchouteux, conducteur(s) des charges électrostatiques grâce à un noir de carbone couramment utilisé comme charge renforçante dans les mélanges.

L'armature de sommet 2, ne possédant pas le même profil transversal que celui de l'armature de carcasse 1 sous-jacente, est séparée de ladite armature de carcasse 1 par un ensemble caoutchouteux de faible épaisseur sur la partie axiale centrale 61, où les deux armatures sont sensiblement parallèles et, de part et d'autre de ladite partie centrale 61, d'épaisseur croissante en allant vers l'extérieur du pneumatique pour former des coins ou profilés triangulaires 62. Pour des raisons d'échauffement, lesdits coins 62 de caoutchouc et la partie axiale 61 ne sont pas réalisés avec des mélanges de caoutchouc conducteurs, car très peu chargés en noir de carbone. Radialement au-dessus de l'armature de sommet 2 est disposée la bande de roulement 3 composée, dans l'exemple choisi, d'une couche radialement intérieure 31 formée de mélange chargé majoritairement par de la silice et surmontée radialement d'une couche radialement extérieure 32 très fortement chargée en silice. La bande de roulement 3 est reliée aux bourrelets par les mélanges de flancs 4, eux aussi très fortement chargés en silice.

Les couches intérieure 31 et extérieure 32 de la bande de roulement 3 sont rendues conductrices au moyen d'un insert caoutchouteux 11 ou zébrure, se présentant sous forme d'un anneau circonférentiel sur toute la hauteur de l'ensemble des deux couches 31 et 32 pour relier la surface de la bande de roulement 3 venant en contact avec le sol avec la nappe de protection 23 radialement extérieure de l'armature de sommet 2, formée de câbles métalliques enrobés dans un mélange de caoutchouc chargé avec un noir de carbone usuel et conducteur. Cet insert 11 de très faible largeur axiale e sur la surface de bande de roulement, égale à 0.5 mm, est, dans le cas présenté, unique et centré théoriquement sur le plan équatorial XX' du pneumatique, et sa trace sur la surface de contact 310 entre la couche intérieure 31 et la nappe de protection 23 de l'armature de sommet 2 est rectiligne et circulaire. L'insert 11 pourrait être décentré, en particulier dans le cas de la présence sur la bande de roulement d'une rainure centrale ; il pourrait également y avoir deux inserts 11, placés par exemple symétriquement par rapport au plan équatorial, ou plus, mais de toute manière placés axialement de sorte que le contact avec le sol puisse être établi quel que soit le taux d'usure de la bande de roulement. On peut également envisager que l'insert 11 constitue un anneau circonférentiellement continu ou discontinu.

La composition de caoutchouc constituant la connexion conductrice 11 des charges électrostatiques est à base d'un caoutchouc naturel et/ou de caoutchoucs synthétiques, habituellement utilisés dans la confection des pneumatiques et particulièrement des bandes de roulement, et ayant comme charge renforçante un noir de carbone conducteur de préférence usuellement utilisé dans la fabrication des pneumatiques.

La connexion électrique entre l'armature de sommet 2 et l'armature de carcasse 1 se réalise, dans le cas décrit, par le moyen d'un insert supplémentaire 13 de section transversale rectangulaire et présentant sur la surface commune avec l'armature de carcasse et la surface commune avec l'armature de sommet des tracés rectilignes et circulaires de largeur égale à 0,5 mm, ledit insert supplémentaire 13 pouvant être circonférentiellement, continu ou discontinu.

Par ailleurs, l'insert 11 conducteur de charges électrostatiques, du fait de sa composition caoutchouteuse à haute teneur en noir de carbone, peut être réalisé par tous moyens appropriés au moment de la confection du pneumatique à l'état non vulcanisé qu'après vulcanisation. Cependant lorsque l'on souhaite réaliser la bande de roulement 3 par coextrusion des couches intérieure 31 et extérieure 32, il est avantageux, voire nécessaire selon les mélanges utilisés, de réaliser l'insert conducteur 11 par extrusion durant la confection de ladite bande de roulement 3 à l'état non vulcanisé.

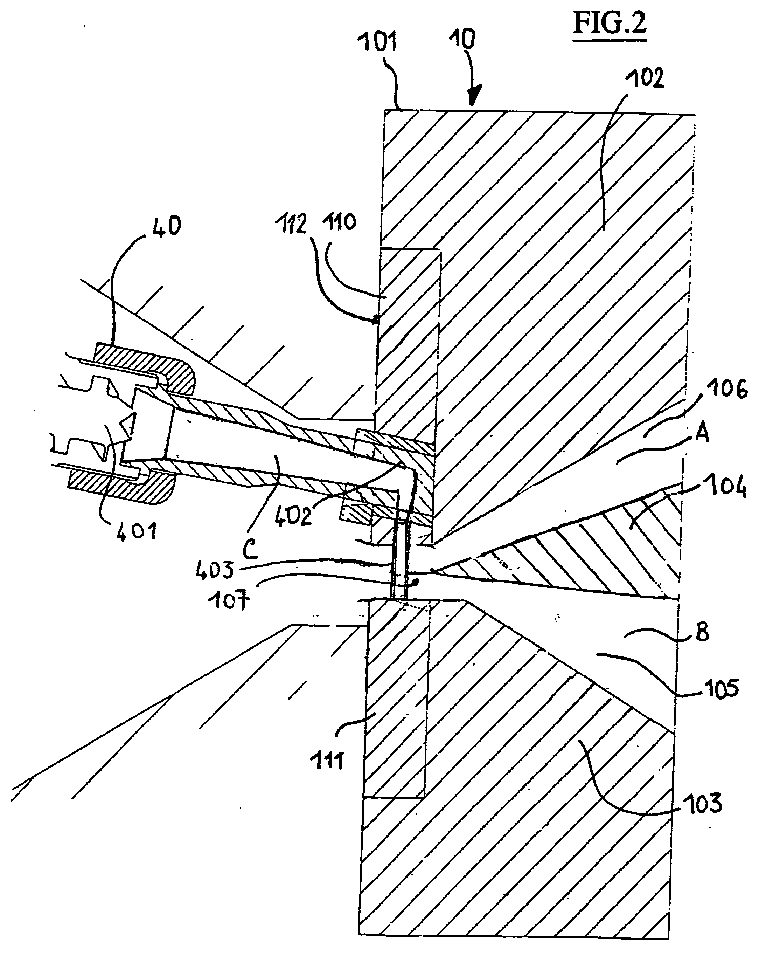

On a représenté partiellement sur la figure 2, l'appareillage permettant de réaliser une bande de roulement à l'état non vulcanisé comportant deux couches de mélanges caoutchouteux non-conducteurs A et B coextrudés et comportant un insert de mélange caoutchouteux conducteur C réalisé par coextrusion avec l'ensemble des mélanges A et B de la bande de roulement 3.

Ainsi selon la figure 2, est représentée une tête d'extrusion 101 d'une première extrudeuse principale 10 permettant de coextruder deux mélanges caoutchouteux non vulcanisés A et B, destiné à la fabrication des parties inférieure et supérieure de la bande de roulement 3. La tête d'extrusion 101 comprend une voûte supérieure 102 et une voûte inférieure 103 délimitant avec un support intermédiaire 104 deux canaux d'écoulement 106 et 105 chacun d'un des mélanges A et B, lesdits canaux débouchant sur un même orifice d'extrusion 107 au travers duquel les deux mélanges A et B sont refoulés.
L'orifice d'extrusion 107 est délimité par les première et deuxième parois d'une lame d'extrusion 112, que l'on nommera en référence aux figures respectivement paroi supérieure 110 et paroi inférieure 111, et permet de conférer à l'ensemble constitué par les deux mélanges coextrudés le profil souhaité.

Dans l'exemple choisi, l'extrudeuse est une extrudeuse dite "à nez plat" dans laquelle les parois supérieure 110 et inférieure 111 de la lame d'extrusion 112 sont fixes. Cependant l'invention ne se limite pas à l'utilisation de ce type d'extrudeuse, on peut également envisager une extrudeuse dite "nez à rouleau" dans laquelle la paroi supérieure 110 de la lame d'extrusion 112 est fixe et la paroi inférieure de la lame est mobile et constituée par la surface extérieure d'un rouleau associé à l'extrudeuse.

A l'extrudeuse principale 10 est associée une extrudeuse 40 de très petite taille appelée couramment " micro-extrudeuse ", montée de manière fixe sur la paroi supérieure 110 de la lame d'extrusion 112. Cette extrudeuse, armée d'une vis 401 et d'une tête d'extrusion 402, comporte à son extrémité une buse 403 fixée au nez de la micro-extrudeuse 40, et destinée à extruder, selon des profil et trace désirés, l'insert I dans le profilé des deux mélanges non vulcanisés et chauds sortant de l'orifice 107 de l'extrudeuse 10.

La tête d'extrusion 402 est coudée à son extrémité, de manière à ce que la buse d'extrusion 403, fixée au nez de la tête d'extrusion et placée dans l'orifice d'extrusion 107 de l'extrudeuse principale 10, puisse être appliquée contre la paroi inférieure 111 de la lame d'extrusion (ou surface extérieure du rouleau dans le cas d'une extrudeuse nez à rouleau). Un mélange de caoutchouc conducteur C destiné à former l'insert 11, est ainsi extrudé dans le flux de l'ensemble des deux mélanges non-conducteurs A et B.

La figure 3 montre, en agrandissement, une buse d'extrusion 403 à filière mobile utilisée avec la micro-extrudeuse de la figure 2, ladite filière étant en position de contact avec la paroi inférieure de la lame d'extrusion de l'extrudeuse principale. La lame d'extrusion 106 reçoit dans un alésage sensiblement perpendiculaire à la tête d'extrusion 402 la buse 403 à filière mobile, présentant sur sa surface cylindrique une fente 407 réalisée suivant une section appropriée sur une partie de sa hauteur. Le contact entre la base 408 de la buse à filière mobile 403 et la paroi inférieure 111 de la lame d'extrusion 112 est maintenu par la pression du mélange conducteur agissant sur la section 409. On peut avec ce dispositif réaliser si on le souhaite l'extrusion du mélange conducteur en discontinu.

Il est donc simple de réaliser un tel appareillage en utilisant des extrudeuses couramment utilisées pour la coextrusion, de type nez à rouleau ou nez plat. En effet, les modifications à opérer sur lesdites extrudeuses consistent à changer la paroi supérieure de la lame d'extrusion afin de réaliser l'alésage permettant d'accueillir la tête d'extrusion d'une micro-extrudeuse. On comprend aisément que l'on peut réaliser plusieurs inserts en prévoyant plusieurs fixations possibles sur la paroi supérieure de la lame d'extrusion qui pourront être utilisés successivement ou simultanément selon la réalisation souhaitée, à l'aide d'un nombre adapté de micro-extrudeuses.

De la même façon, on a choisi de présenter la réalisation d'une bande de roulement présentant deux couches de mélanges caoutchouteux mais l'invention s'applique également à la réalisation de bande de roulement comportant plus de deux couches de mélanges coextrudés. En effet, la transposition de l'appareillage décrit à une extrudeuse permettant l'extrusion de plus de deux mélanges ne présente aucune difficulté.

Sans sortir du cadre de l'invention, il est clair que le procédé et l'appareillage de coextrusion conformes à l'invention peuvent être utilisés pour la mise en place d'insert dans des mélanges caoutchouteux sans aspect de conduction, comme par exemple pour placer un ou des inserts de couleur dans des mélanges caoutchouteux noirs.

## Revendications

1. Procédé d'obtention d'un élément à base de mélanges caoutchouteux destiné à la fabrication d'un pneumatique comportant les étapes suivantes :
- on extrude par coextrusion au moins deux couches de mélanges caoutchouteux (A, B) sur une extrudeuse principale (10) munie d'au moins deux vis d'extrusion respectivement pourvue d'un canal d'écoulement (105, 106) débouchant dans un même orifice d'extrusion (107) délimité par les première (110) et deuxième (111) parois d'une lame d'extrusion (112),
- on insère par coextrusion simultanément au travers des deux couches au moins un insert (11) de mélange caoutchouteux (C), **caractérisé en ce que** la dite insertion est réalisée au moyen d'une buse (403) d'une micro-extrudeuse (40), ladite buse étant appliquée contre la deuxième paroi (111) de la lame d'extrusion (112) de l'extrudeuse principale (10).

2. Procédé selon la revendication 1, dans lequel les couches de mélanges caoutchouteux constituent des parties (31, 32) d'une bande de roulement (3).

3. Procédé selon la revendication 2, dans lequel les mélanges caoutchouteux (A, B) constituant les parties (31, 32) de la bande de roulement sont non-conducteurs de l'électricité et le mélange caoutchouteux (C) extrudé par la micro-extrudeuse (40) est conducteur de l'électricité.

4. Appareillage de coextrusion de mélanges caoutchouteux qui comprend une extrudeuse principale (10) comportant une tête d'extrusion (101) comprenant au moins deux canaux d'écoulement (106, 105) chacun d'un mélange caoutchouteux (A, B), lesdits canaux débouchant sur un même orifice d'extrusion (107) au travers duquel sont refoulés les deux mélanges caoutchouteux(A, B), l'orifice d'extrusion (107) étant délimité par les première (110) et deuxième (111) parois d'une lame d'extrusion (112), **caractérisé en ce qu'**il comprend également au moins une micro-extrudeuse (40) d'un troisième mélange caoutchouteux (C) dont la tête d'extrusion (402) est munie à son extrémité d'une buse (403), ladite buse étant insérée dans la première paroi (110) de la lame d'extrusion (112) de l'extrudeuse principale (10) de sorte que la buse d'extrusion (403) soit placée dans l'orifice d'extrusion (107) de l'extrudeuse principale (10) et appliquée contre la deuxième paroi (111) de la lame d'extrusion (112) de ladite extrudeuse principale (10) afin d'insérer le troisième mélange caoutchouteux (C) dans le profilé des mélanges caoutchouteux (A, B) sortant de l'extrudeuse principale (10).

5. Appareillage selon la revendication 4, dans lequel les première (110) et deuxième (111) parois de la lame d'extrusion (112) sont fixes.

6. Appareillage selon la revendication 4, dans lequel la première paroi de la lame d'extrusion étant fixe, sa deuxième paroi est constituée par la surface extérieure d'un rouleau porté par l'extrudeuse principale.

7. Appareillage selon l'une quelconque des revendications 4 ou 5, dans lequel la buse d'extrusion (403) est à filière mobile, fendue sur une partie de sa hauteur et insérée dans un alésage sensiblement perpendiculaire à la tête d'extrusion (402), la base (408) de ladite buse étant maintenue en contact avec la deuxième paroi (111) de la lame d'extrusion (112) par la pression du mélange extrudé (C) par cette micro-extrudeuse.

## Patentansprüche

1. Verfahren zur Herstellung eines Elements auf der Basis von Kautschukmischungen, das für die Herstellung eines Luftreifens vorgesehen ist, welches die folgenden Schritte umfasst:
- mindestens zwei Lagen aus Kautschukmischungen (A, B) werden an einem Hauptextruder (10) coextrudiert, der mit mindestens zwei Extrusionsschnecken ausgestattet ist, die jeweils mit Durchflusskanälen (105, 106) versehen sind, die in einer einzigen Extrusionsöffnung (107) münden, die durch die erste Wand (110) und die zweite Wand (111) eines Extrusionsspaltes (112) begrenzt wird;
- durch die beiden Schichten hindurch wird gleichzeitig durch Coextrusion mindestens ein Einsatz (11) aus einer Kautschukmischung (C) eingefügt,
**dadurch gekennzeichnet, dass** der Einsatz mittels einer Düse (403) eines Mikroextruders (40) hergestellt wird, wobei die Düse an der zweiten Wand (111) des Extrusionsspaltes (112) des Hauptextruders (10) anliegt.

2. Verfahren nach Anspruch 1, wobei die Lagen aus den Kautschukmischungen Teile (31, 32) eines Laufstreifens (3) sind.

3. Verfahren nach Anspruch 2, wobei die Kautschukmischungen (A, B), die die Teile (31, 32) des Laufstreifens bilden, elektrisch nicht leitfähig sind, und die Kautschukmischung (C), die mit Hilfe des Mikroextruders (40) extrudiert wird, elektrisch leitfähig ist.

4. Vorrichtung für die Coextrusion von Kautschukmischungen, die einen Hauptextruder (10) umfasst, der einen Extrusionskopf (101) aufweist, welcher mindestens zwei Durchflusskanäle (106, 105) für jede Kautschukmischung (A, B) aufweist, wobei die Kanäle an einer Extrusionsöffnung (107) münden, durch die die beiden Kautschukmischungen (A, B) abgegeben werden, wobei die Extrusionsöffnung (107) durch die erste Wand (110) und die zweite Wand (111) des Extrusionsspaltes (112) begrenzt wird, **dadurch gekennzeichnet, dass** sie ferner mindestens einen Mikroextruder (40) für eine dritte Kautschukmischung (C) umfasst, dessen Extrusionskopf (402) an seinem Ende mit einer Düse (403) versehen ist, wobei die Düse in der ersten Wand (110) des Extrusionsspaltes (112) des Hauptextruders (10) so eingefügt ist, dass sich die Extrusionsdüse (403) in der Extrusionsöffnung (107) des Hauptextruders (10) befindet und an der zweiten Wand (111) des Extrusionsspaltes (112) des Hauptextruders (10) anliegt, um die dritte Kautschukmischung (C) in das Profil der Kautschukmischungen (A, B) einzubringen, die den Hauptextruder (10) verlassen.

5. Vorrichtung nach Anspruch 4, wobei die erste Wand (110) und die zweite Wand (111) des Extrusionsspaltes (112) fest sind.

6. Vorrichtung nach Anspruch 4, wobei die erste Wand des Extrusionsspaltes fest ist und die zweite Wand aus der äußeren Oberfläche einer Walze besteht, die sich an dem Hauptextruder befindet.

7. Vorrichtung nach einem der Ansprüche 4 oder 5, wobei die Extrusionsdüse (403) eine bewegliche Düse ist, die über einen Teil ihrer Höhe geschlitzt ist und in einer zum Extrusionskopf (402) in etwa senkrechten Bohrung angebracht ist, wobei die Basis (408) der Düse mit der zweiten Wand (111) des Extrusionsspaltes (112) durch den Druck des durch den Mikroextruder extrudierten Gemisches (C) in Kontakt gehalten wird.

## Claims

1. A process for obtaining an element based on rubber mixes which is intended for the manufacture of a tyre, comprising the following steps:
- at least two layers of rubber mixes (A, B) are coextruded on a main extruder (10) equipped with at least two extrusion screws provided respectively with a flow channel (105, 106) opening into one and the same extrusion orifice (107) defined by the first (110) and second (111) walls of an extrusion plate (112),
- at least one insert (11) of rubber mix (C) is simultaneously inserted by coextrusion across the two layers, **characterised in that** said insertion is effected by means of a nozzle (403) of a microextruder (40), said nozzle being applied against the second wall (111) of the extrusion plate (112) of the main extruder (10).

2. A process according to Claim 1, in which the layers of rubber mixes form parts (31, 32) of a tread (3).

3. A process according to Claim 2, in which the rubber mixes (A, B) constituting the parts (31, 32) of the tread are non-electrically conductive and the rubber mix (C) extruded by the microextruder (40) is electrically conductive.

4. An apparatus for coextruding rubber mixes which comprises a main extruder (10) comprising an extrusion head (101) comprising at least two flow channels (106, 105) each for a rubber mix (A, B), said channels opening into one and the same extrusion orifice (107) through which the two rubber mixes (A, B) are delivered, the extrusion orifice (107) being defined by the first (110) and second (111) walls of an extrusion plate (112), **characterised in that** it also comprises at least one microextruder (40) for a third rubber mix (C), the extrusion head (402) of which is provided with a nozzle (403) at its end, said nozzle being inserted into the first wall (110) of the extrusion plate (112) of the main extruder (10) such that the extrusion nozzle (403) is placed in the extrusion orifice (107) of the main extruder (10) and applied against the second wall (111) of the extrusion plate (112) of said main extruder (10) in order to insert the third rubber mix (C) into the profiled member of the rubber mixes (A, B) emerging from the main extruder (10).

5. An apparatus according to Claim 4, in which the first (110) and second (111) walls of the extrusion plate (112) are fixed.

6. An apparatus according to Claim 4, in which, the first wall of the extrusion plate being fixed, its second wall is formed by the outer surface of a roller borne by the main extruder.

7. An apparatus according to any one of Claims 4 or 5, in which the extrusion nozzle (403) has a mobile die, slotted over part of its height and inserted in a bore substantially perpendicular to the extrusion head (402), the base (408) of said nozzle being kept in contact with the second wall (111) of the extrusion plate (112) by the pressure of the mix (C) extruded by this microextruder.
